# EUROPÄISCHE PATENTSCHRIFT

(11) **EP 1 833 705 B1**
(45) Veröffentlichungstag und Bekanntmachung des Hinweises auf die Patenterteilung: **02.06.2010**
(21) Anmeldenummer: 05801540.5
(22) Anmeldetag: 02.11.2005
(51) Int. Cl.: B60S 1/04

(54) **SCHEIBENWISCHVORRICHTUNG**
WINDSHIELD WIPER DEVICE
SYSTEME D'ESSUIE-GLACE

(30) Priorität: 29.12.2004 DE 102004063179
(43) Veröffentlichungstag der Anmeldung: 19.09.2007
(73) Patentinhaber: ROBERT BOSCH GMBH, 70442 Stuttgart (DE)
(72) Erfinder: ZIMMER, Joachim, 77880 Sasbach (DE); ALBRECHT, Gerard, F-67690 Hatten (FR); RAPP, Juergen, 77886 Lauf (DE); SCHABANEL, Francois, F-94100 Saint Maur des Fossés (FR); BOOS, Tino, 76532 Baden-Baden (DE); ESCHENBRENNER, Nicolas, F-67100 Strasbourg (FR); PORCHET, Frank, F-92700 Colombes (FR)
(86) Internationale Anmeldenummer: PCT/EP2005/055699
(87) Internationale Veröffentlichungsnummer: WO 2006/072486

(56) Entgegenhaltungen:
- EP-A- 0 952 053
- EP-A- 0 963 890
- EP-A- 1 197 405
- DE-A1- 10 232 877
- DE-A1- 10 301 900
- DE-A1- 10 325 736
- FR-A- 2 848 515
- FR-A- 2 855 488
- US-A- 5 142 941
- US-B1- 6 421 873

## Beschreibung

Die Erfindung betrifft eine Scheibenwischvorrichtung mit Befestigungspunkten, mittels derer sie an einer Karosserie eines Kraftfahrzeuges befestigt ist.

Bisher werden Scheibenwischanlagen an die Karosserie geschraubt oder genietet. Für die Verschraubung oder die Vernietung benötigt man spezielle Werkzeuge. Außerdem erfordert die Verschraubung oder die Vernietung einen relativ hohen Zeitbedarf, der die Montagekosten erhöht. Aus der EP-A-952 053 ist eine Scheibenwischvorrichtung mit den Merkmalen des Oberbegriffs des Anspruchs 1 bekannt.

Die Erfindung hat die Aufgabe, die Scheibenwischvorrichtung der eingangs genannten Art dahingehend zu verbessern, dass ihre Montage an die Karosserie zukünftig schneller und somit kostengünstiger durchgeführt werden kann.

Die Erfindung löst die gestellte Aufgabe mit einer Scheibenwischvorrichtung der eingangs genannten Art, bei der erfindungsgemäß mindestens einer der Befestigungspunkte zur Montage der Scheibenwischvorrichtung gegen die Karosserie bewegbar ist. Auf diese Weise kann die Scheibenwischvorrichtung zwischen ausgewählten Bereichen der Karosserie eingespannt werden. Somit können zukünftig Schrauben, Nieten und dergleichen entfallen.

In der Erfindung weist die Scheibenwischvorrichtung ein bereichsweise in ein Rohr gestecktes relativ zum Rohr bewegbares Formrohr auf, wobei das Formrohr mit einer Feder gegen die Karosserie bewegt werden kann. Somit kann das Formrohr und gleichzeitig auch die Scheibenwischvorrichtung mit wenigen Handgriffen an der Karosserie befestigt werden. Die Feder drückt das Formrohr gegen die Karosserie, so dass es schnell und einfach montiert werden kann und gleichzeitig auch bei Erschütterungen an der Karosserie befestigt bleibt.

Zusätzlich kann das Formrohr mit einer Arretierung versehen sein, die verhindert, dass sich das Formrohr beispielsweise bei Erschütterungen von der Karosserie löst.

In einer sehr einfachen und somit kostengünstigen Variante kann die Arretierung ein Sicherungsring sein, der auf einem bolzenförmigen in das Rohr eingeschobenen Fortsatz des Formrohrs sitzt und, der gegen das Rohr anschlägt. Der Sicherungsring wird vorteilhafterweise nach der Montage des Formrohrs an der Karosserie auf den bolzenförmigen Fortsatz aufgesetzt.

Zusätzlich oder alternativ kann der im Rohr steckende Fortsatz des Formrohrs mit Zähnen versehen sein. Die Zähne erhöhen die Reibung zwischen dem im Rohr steckenden bolzenförmigen Fortsatz und der Innenfläche des Rohres. Die Zähne sind somit eine konstruktive Maßnahme, um das Formrohr nach der Montage zuverlässig an der Karosserie zu sichern.

In das Formrohr und das Rohr kann ein Sicherungsstift lösbar eingesteckt werden. Folglich kann man die Anordnung des Formrohrs und des Rohres mit der vorgespannten Feder zur Montage anliefern, so dass das Montagepersonal zur Montage nur noch den Sicherungsstift aus dem Formrohr und dem Rohr herausziehen muss, und dann die Feder das Formrohr gegen die Karosserie bewegt.

Der Befestigungspunkt kann am Formrohr angeordnet und in die Karosserie einsteckbar sein. Somit kann die Scheibenwischvorrichtung durch das Formrohr an der Karosserie befestigt werden.

In einer anderen nicht beanspruchten Ausführungsform kann das Formrohr zwei mit einem Gelenk verbundene Abschnitte aufweisen, wobei der eine Abschnitt in einem Führungsrohr verschiebbar ist, und das Formrohr, bevor es an die Karosserie montiert ist, am Gelenk geknickt ist. Diese Ausführungsvariante kann auch ohne Feder leicht montiert werden, indem das Montagepersonal den in der Karosserie einsteckbaren Befestigungspunkt vor eine in der Karosserie befindliche Öffnung positioniert und anschließend auf das den Knick bildende Gelenk drückt, wodurch der Befestigungspunkt in die in der Karosserie befindliche Öffnung geschoben wird.

Damit sich das Formrohr nach der erfolgten Montage nicht unbeabsichtigt von der Karosserie lösen kann, kann das Gelenk arretierbar sein.

Konstruktiv sehr einfach lässt sich die Arretierung realisieren, wenn das Gelenk mit einer Hülse arretierbar ist. Die Hülse kann über das Gelenk geschoben werden, sodass ein unerwünschtes Einknicken des Gelenks und damit ein unerwünschtes Lösen des Formrohrs von der Karosserie ausgeschlossen ist.

Damit sich die Hülse nicht bei Erschütterungen vom Gelenk verschieben lässt, sondern zuverlässig über dem Gelenk arretiert ist, kann die Hülse einen Vorsprung aufweisen, der in eine Vertiefung am Gelenk eingreift.

Das Gelenk kann sehr preiswert ausgeführt sein, wenn es ein Kugelgelenk oder ein Scharnier aufweist.

In hohen Stückzahlen lässt sich das Scharnier sehr kostengünstig herstellen, wenn es ein Filmscharnier ist.

In einer weiteren nicht beanspruchten Ausführungsform kann das Formrohr mit einem verlängerbaren Rohr verbunden sein. Durch die Verlängerungsmöglichkeit des Rohres kann das Formrohr zur Befestigung gegen die Karosserie bewegt werden.

Das Rohr kann zwei Abschnitte aufweisen, die mit einer ein Innengewinde aufweisenden Hülse verbunden sind, wobei einer der Abschnitte ein mit dem Innengewinde der Hülse verschraubbaren Außengewinde aufweist, und die Hülse drehbar am anderen Abschnitt angeordnet ist. Folglich kann das Rohr durch eine Drehbewegung der Hülse verlängert werden, wodurch das Formrohr gegen die Karosserie bewegt wird. Somit lässt sich das Formrohr mit einer einfachen Handbewegung an der Karosserie befestigten.

Damit die Hülse drehbar am anderen Abschnitt angeordnet ist, kann der andere Abschnitt des Rohres eine umlaufende Nut aufweisen, in die ein an der Hülse angebrachter Vorsprung eingreift.

In einer weiteren nicht beanspruchten Ausführungsalternative kann das Formrohr mindestens einen Stift aufweisen, der in eine an der Karosserie angebrachte Öffnung einsteckbar ist. Somit kann auf die Verwendung von Schrauben, Nieten oder dergleichen schnell mit der Karosserie verzichtet werden.

Damit die Scheibenwischvorrichtung durch das Formrohr auch bei Erschütterungen zuverlässig mit der Karosserie verbunden ist, kann der mindestens eine Stift an seinem in der Öffnung der Karosserie einsteckbaren Ende Zähne aufweisen.

Wenn der mindestens eine Stift am Formrohr arretierbar ist, kann er sich nicht unerwünscht, beispielsweise durch Erschütterungen, von der Karosserie lösen.

Zur schnellen und sicheren Montage, kann der mindestens eine Stift mit einem am Formrohr einhängbaren Hebel gegen die Karosserie bewegt werden.

Zum besseren Halt des mindestens einen Stifts kann in der Öffnung der Karosserie ein mindestens eine Öffnung aufweisendes Gummiteil vorgesehen sein. Der Stift wird zur Befestigung des Formrohrs an der Karosserie in die Öffnung des Gummisteils eingesteckt. Insbesondere, wenn der Stift mit Zähnen versehen versehen ist, hält er besonders zuverlässig im Gummiteil.

Wenn das Gummiteil vor der Endmontage des Formrohrs schon auf den mindestens einen Stift aufgesetzt ist, kann das Montagepersonal die so angelieferten Formrohre noch schneller an die Karosserie montieren.

Nachfolgend werden verschiedene Ausführungsbeispiele anhand der beiliegenden Zeichnungen näher erläutert.

Im Einzelnen zeigen:
- Fig. 1: eine Schnittansicht von oben auf eine erste Ausführungsform eines Formrohrs;
- Fig. 2: eine Schnittansicht von oben auf eine zweite Ausführungsform eines Formrohrs;
- Fig. 3: eine Schnittansicht von oben auf eine dritte Ausführungsform des Formrohrs;
- Fig. 4: eine Schnittansicht von oben auf das Formrohr aus Fig. 3;
- Fig. 5: eine Schnittansicht von oben auf eine fünfte nicht beanspruchte Ausführungsform des Formrohrs;
- Fig. 6: eine Schnittansicht von oben auf das Formrohr aus Fig. 5 nach der Endmontage;
- Fig. 7: eine Detailansicht auf eine Ausführungsvariante eines Gelenks des Formrohrs aus Fig. 5;
- Fig. 8: eine Detailansicht auf das Gelenk aus Fig. 7 im arretiertem Zustand;
- Fig. 9.: eine Schnittansicht von der Seite auf ein verlängerbares Rohr,
- Fig. 10: eine Schnittansicht von der Seite auf das Rohr aus Fig. 9 im verlängerten Zustand
- Fig. 11: eine Draufsicht auf eine sechste nicht beanspruchte Ausführungsform des Formrohrs;
- Fig. 12: eine Seitenansicht des Formrohrs aus Fig. 11 mit einem Hebel;
- Fig. 13: eine Seitenansicht auf das Formrohr aus Fig. 11 nach der Endmontage;
- Fig. 14: eine perspektivische Ansicht auf das Formrohr aus Fig. 11;

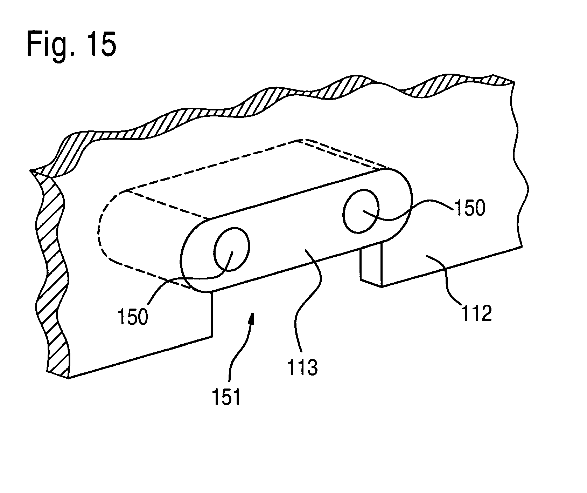

- Fig. 15: eine perspektivische Ansicht auf ein Gummiteil.

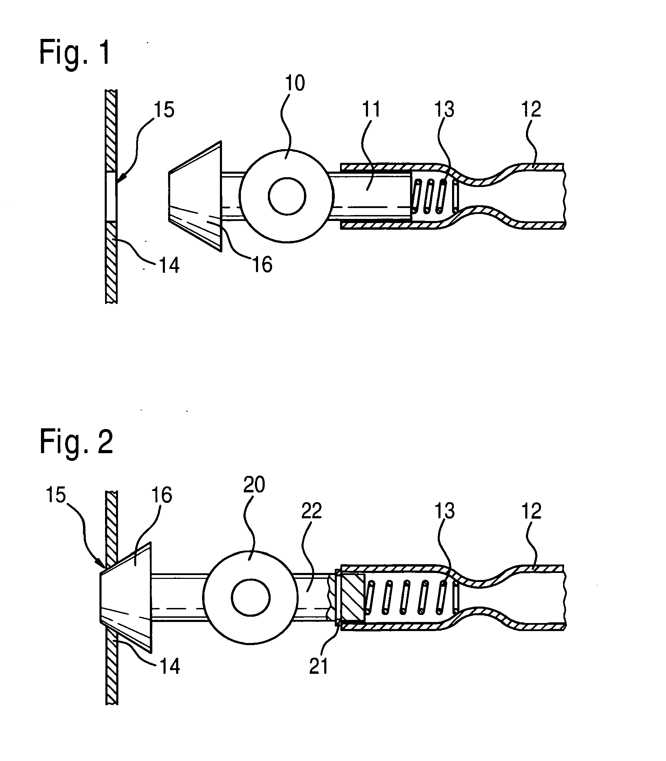

Fig. 1 zeigt ein Formrohr 10 mit einem Fortsatz 11, der in ein Rohr 12 eingesteckt ist. Das Formrohr 10 und der Fortsatz 11 sind im Rohr 12 relativ zu diesem verschiebbar. Am Ende des Fortsatzes 11 ist eine Feder 13 angeordnet, die das Formrohr 10 gegen eine in einer Karosserie 14 vorgesehene Öffnung 15 bewegt.

Am Formrohr 10 ist ein Befestigungspunkt 16 vorgesehen, der in die Öffnung 15 eingesteckt werden kann. Durch die Feder 13 kann das Formrohr 10 schnell und einfach montiert werden. Außerdem drückt die Feder 13 auch bei Erschütterungen das Formrohr 10 zuverlässig gegen die Karosserie.

Zusätzlich zur Feder 13 kann ein Formrohr 20 mit einem Sicherungsring 21 versehen sein (siehe Fig. 2), der das Formrohr 20 arretiert, wenn der Befestigungspunkt 16 in die Öffnung 15 in der Karosserie 14 eingesteckt ist. Der Sicherungsring 21 verhindert, dass ein Fortsatz 22 nach der Endmontage in das Rohr 12 geschoben werden kann. Zweckmäßigerweise wird der Sicherungsring 21 auf den Fortsatz 22 aufgesetzt nach dem das Formrohr 20 an die Karosserie 14 montiert wurde.

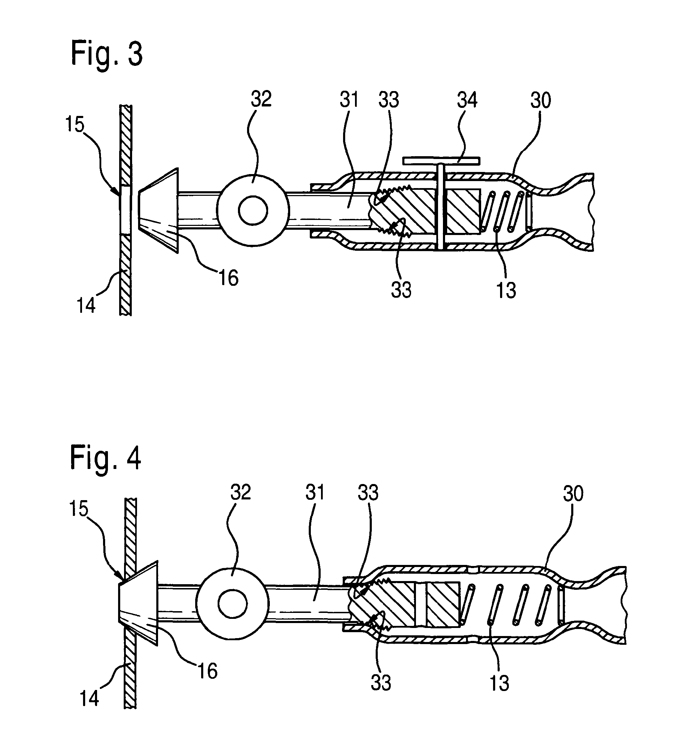

Ein in einem Rohr 30 steckender Fortsatz 31 eines Formrohrs 32 kann mit Zähnen 33 versehen sein (siehe Fig. 3). Die Zähne 32 erhöhen die Reibung zwischen dem Fortsatz 31 und dem Rohr 30. Dadurch wird das Formrohr 32 nach der Montage zuverlässig an der Karosserie 14 gesichert.

In das Rohr 30 und das Formrohr 32 ist ein Sicherungsstift 34 lösbar eingesteckt. Somit kann die vormontierte Anordnung des Rohres 30 und des Formrohrs 32 mit der vorgespannten Feder 13 zur Montage angeliefert werden, wobei das Montagepersonal zur Montage nur noch den Sicherungsstift 34 aus dem Rohr 30 und dem Formrohr 32 herausziehen muss. Sobald der Sicherungsstift 34 aus dem Rohr 30 und dem Formrohr 32 herausgezogen ist, bewegt die Feder 13 das Formrohr 22 gegen die Karosserie 14 (siehe Fig. 4), sodass der Befestigungspunkt 16 in die Öffnung 15 gesteckt wird. Gleichzeitig werden die Zähne 33 in die Innenwandung des Rohres 30 eingedrückt.

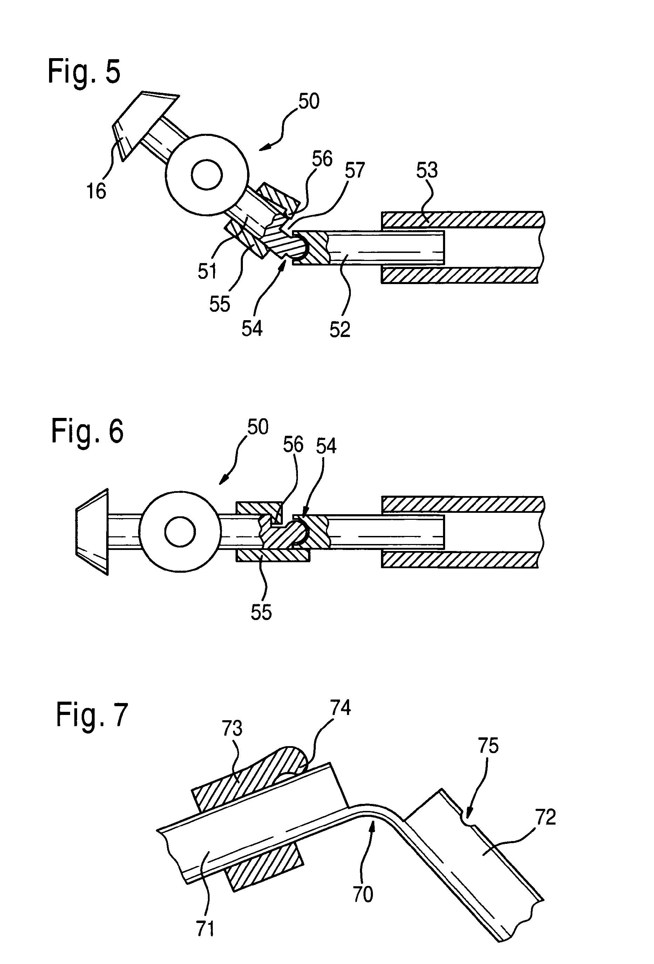

Fig. 5 zeigt ein Formrohr 50, das Abschnitte 51 und 52 aufweist. Der Abschnitt 52 ist in einem Führungsrohr 53 verschiebbar angeordnet. Zwischen den Abschnitten 51 und 52 ist ein Gelenk 54 vorgesehen. Vor der Endmontage weist das Formrohr 50 im Bereich des Gelenks 54 einen Knick auf. Das Montagepersonal drückt auf das den Knick bildende Gelenk 54, wodurch der Befestigungspunkt 16 in die Öffnung der Karosserie geschoben wird.

Damit sich das Formrohr 50 nach der Endmontage nicht unbeabsichtigt von der Karosserie lösen kann, kann das Gelenk 54 mit einer Hülse 55 arretiert werden. Die Hülse 55 wird zur Arretierung über das Gelenk 54 geschoben (siehe Fig. 6). Damit sich die Hülse 55 bei Erschütterungen nicht vom Gelenk 54 herunter schieben lässt, kann die Hülse 55 einen Vorsprung 56 aufweisen, der in eine Vertiefung 57 einrastet (siehe Fign. 5 und 6).

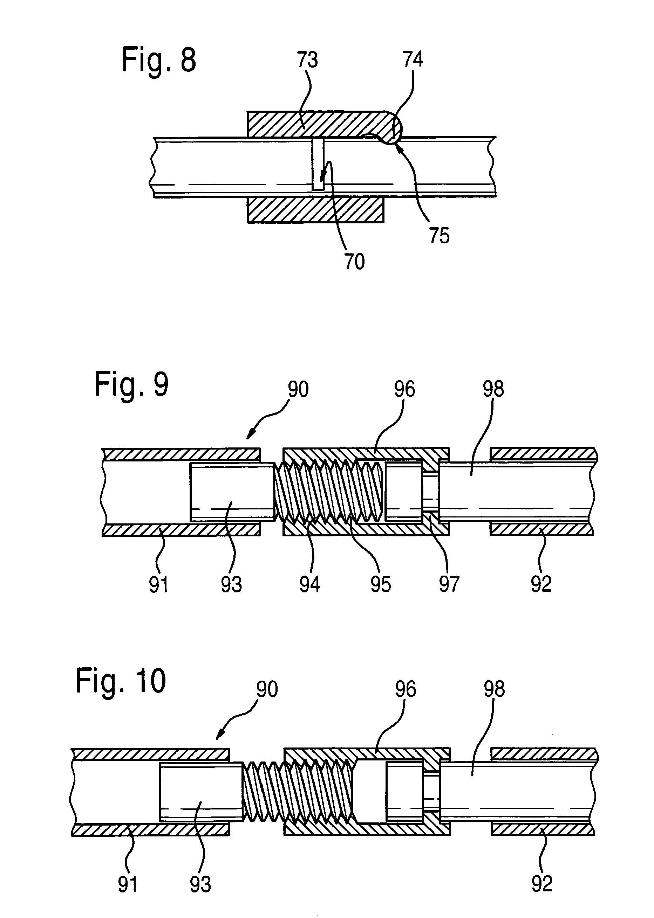

Das Gelenk 54 ist ein Kugelgelenk. Es ist jedoch auch möglich ein Filmscharnier 70 zwischen Abschnitten 71 und 72 vorzusehen (siehe Fig. 7). Dann weist eine Hülse 73 einen Vorsprung 74 auf, der in eine Vertiefung 75 einrastet, wenn die Hülse 73 über das Filmscharnier 70 geschoben wird (siehe Fig. 8).

Fig. 9 zeigt ein verlängerbares Rohr 90, das zwei Abschnitte 91 und 92 aufweist. Mit dem Rohr 90 kann ein hier nicht näher gezeigtes Formrohr verbunden sein. Um das Formrohr mit der ebenfalls nicht gezeigten Karosserie zu befestigen, wird das Rohr 90 verlängert (siehe Fig. 10).

In den Abschnitt 91 ist ein Bolzen 93 eingesteckt, der ein Außengewinde 94 aufweist. Eine mit einem Innengewinde 95 versehene Hülse 96 ist auf das Außengewinde 94 aufgeschraubt. Die Hülse 96 weist einen Vorsprung 97 auf, der in eine umlaufende Nut eines in den Abschnitt 92 eingesteckten Bolzens 98 eingreift. Somit ist die Hülse 96 drehbar am Bolzen 98 des Abschnittes 92 angeordnet, sodass das Rohr 90 mit einer einfachen Drehbewegung der Hülse 96 verlängert werden kann.

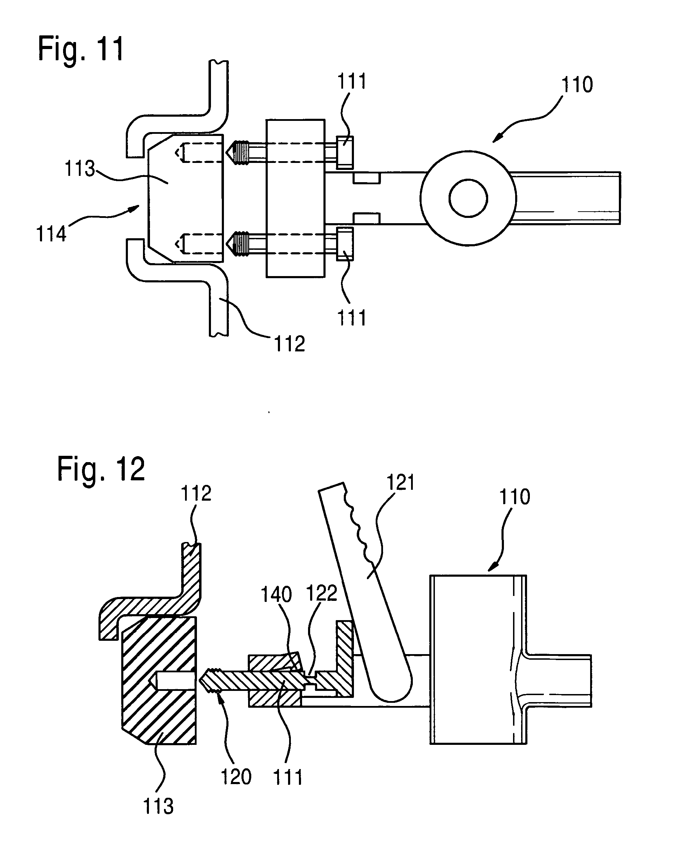

Fig. 11 zeigt ein Formrohr 110, das mit Stiften 111 versehen ist. Die Stifte 111 sind gegen eine Karosserie 112 bewegbar. Die Stifte 111 können in ein in einer Karosserieöffnung 114 angeordnetes Gummiteil 113 eingesteckt werden.

Damit die Stifte 111 auch bei Erschütterungen zuverlässig in der Karosserie 112 arretiert sind, können sie mit Zähnen 120 versehen sein.

Damit das Formrohr 110 schnell und einfach an der Karosserie 112 montiert werden kann, kann mit einem Hebel 121 gegen die Stifte 111 gedrückt werden (siehe Fig. 12).

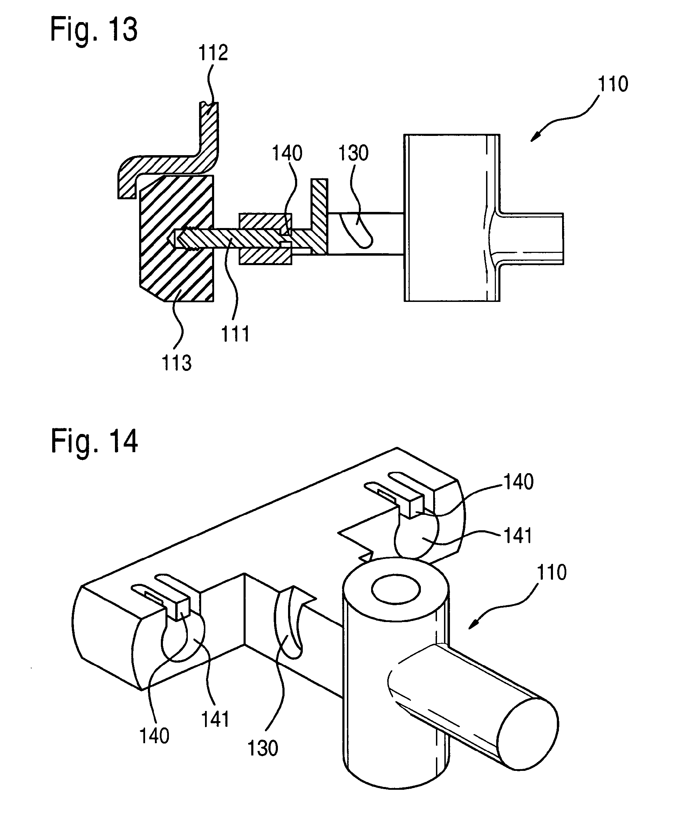

Das Formrohr 110 ist mit Haken 140 versehen (siehe Fign. 12 und 14) und die Stifte mit Vertiefungen 122 (siehe Fig. 12), um die in Öffnungen 141 (siehe Fig. 14) eingesteckten Stifte 111 zu arretieren, nach dem sie in das Gummiteil 113 gesteckt wurden(siehe Fig. 13).

Das Formrohr 110 weist Nuten 130 auf (siehe Fign. 13 und 14), in die der Hebel 121 eingehängt werden kann, um die Stifte 111 in das Gummiteil 113 zu schieben.

Das Gummiteil 113 ist mit Öffnungen 150 versehen, in welche die Stifte 111 eingesteckt werden können. Unterhalb des Gummisteils 113 ist in der Karosserie 112 eine Aussparung 151 vorgesehen. Die Aussparung 150 dient dem Fußgängeraufprallschutz. Bei einem Aufprall eines Fußgängers auf eine Scheibenwischvorrichtung klinkt das Gummiteil 113 aus der Karosserie 112 aus, wodurch sich das Formrohr 110 ebenfalls von der Karosserie löst und somit dem Aufprall ausweicht.

Bei allen beschriebenen Ausführungsformen ist es möglich, dass diese außer dem gegen die Karosserie bewegbaren Befestigungspunkt mit mindestens einem weiteren ein Widerlager bildenden Befestigungspunkt versehen sind.

## Patentansprüche

1. Scheibenwischvorrichtung mit Befestigungspunkten (16), mittels derer sie an einer Karosserie (14) eines Kraftfahrzeuges befestigt ist wobei mindestens einer der Befestigungspunkte (16) zur Montage der Scheibenwischvorrichtung gegen die Karosserie (14) bewegbar ist, **dadurch gekennzeichnet, dass** sie ein bereichsweise in ein Rohr (12, 30) gestecktes relativ zum Rohr (12, 30) bewegbares Formrohr (10, 20, 32) aufweist, wobei das Formrohr (10, 20, 32) mit einer Feder (13) gegen die Karosserie (14) bewegbar ist.

2. Scheibenwischvorrichtung nach Anspruch 1, **dadurch gekennzeichnet, dass** das Formrohr (20) mit einer Arretierung versehen ist.

3. Scheibenwischvorrichtung nach Anspruch 2, **dadurch gekennzeichnet, dass** die Arretierung ein Sicherungsring (21) ist.

4. Scheibenwischvorrichtung nach einem der Ansprüche 1 bis 3, **dadurch gekennzeichnet, dass** der im Rohr (30) steckende bolzenförmige Fortsatz (31) des Formrohrs (32) mit Zähnen (33) versehen ist.

5. Scheibenwischvorrichtung nach einem der Ansprüche 1 bis 4, **dadurch gekennzeichnet, dass** in das Formrohr (32) und das Rohr (30) ein Sicherungsstift (34) lösbar eingesteckt ist.

6. Scheibenwischvorrichtung nach einem der Ansprüche bis 5, **dadurch gekennzeichnet, dass** der Befestigungspunkt (16) am Formrohr (10, 20, 32) angeordnet und in die Karosserie (14) einsteckbar ist.

## Claims

1. Windscreen wiper device with fastening points (16) by means of which it is fastened to a motor vehicle body (14), wherein at least one of the fastening points (16) is movable towards the body (14) in order to fit the windscreen wiper device, **characterized in that** said windscreen wiper device has a shaped tube (10, 20, 32) which is inserted in areas into a tube (12, 30) and is movable relative to the tube (12, 30), the shaped tube (10, 20, 32) being movable towards the body (14) by means of a spring (13).

2. Windscreen wiper device according to Claim 1, **characterized in that** the shaped tube (20) is provided with a locking means.

3. Windscreen wiper device according to Claim 2, **characterized in that** the locking means is a locking ring (21).

4. Windscreen wiper device according to one of Claims 1 to 3, **characterized in that** the bolt-shaped extension (31) of the shaped tube (32), which extension is inserted in the tube (30), is provided with teeth (33).

5. Windscreen wiper device according to one of Claims 1 to 4, **characterized in that** a locking pin (34) is inserted releasably into the shaped tube (32) and the tube (30).

6. Windscreen wiper device according to one of Claims 1 to 5, **characterized in that** the fastening point (16) is arranged on the shaped tube (10, 20, 32) and is insertable into the body (14).

## Revendications

1. Dispositif d'essuie-glace avec des points de fixation (16), au moyen desquels il est fixé à une carrosserie (14) d'un véhicule automobile, au moins l'un des points de fixation (16) pouvant être déplacé pour le montage du dispositif d'essuie-glace contre la carrosserie (14), **caractérisé en ce qu'**il présente un tube moulé (10, 20, 32) enfoncé en partie dans un tube (12, 30) et déplaçable par rapport au tube (12, 30), le tube moulé (10, 20, 32) pouvant être déplacé au moyen d'un ressort (13) contre la carrosserie (14).

2. Dispositif d'essuie-glace selon la revendication 1, **caractérisé en ce que** le tube moulé (20) est pourvu d'un blocage.

3. Dispositif d'essuie-glace selon la revendication 2, **caractérisé en ce que** le blocage est une bague de fixation (21).

4. Dispositif d'essuie-glace selon l'une quelconque des revendications 1 à 3, **caractérisé en ce que** la saillie en forme de boulon (31) du tube moulé (32), enfoncée dans le tube (30), est pourvue de dents (33).

5. Dispositif d'essuie-glace selon l'une quelconque des revendications 1 à 4, **caractérisé en ce qu'**une goupille de fixation (34) est enfichée de manière amovible dans le tube moulé (32) et le tube (30).

6. Dispositif d'essuie-glace selon l'une quelconque des revendications 1 à 5, **caractérisé en ce que** le point de fixation (16) est disposé sur le tube moulé (10, 20, 32) et peut être enfiché dans la carrosserie (14).
